# EUROPEAN PATENT SPECIFICATION

(11) **EP 2 865 544 B1**
(45) Date of publication and mention of the grant of the patent: **14.06.2017**
(21) Application number: 14188217.5
(22) Date of filing: 08.10.2014
(51) Int. Cl.: B60C 11/03

(54) **Tread block structure of pneumatic tire**
Laufflächenblockkonstruktion für Luftreifen
Structure de bloc de bande de roulement de pneumatique

(30) Priority: 23.10.2013 KR 20130126500
(43) Date of publication of application: 29.04.2015
(73) Proprietor: Hankook Tire Co., Ltd., Gangnam-gu, Seoul 135-723 (KR)
(72) Inventor: Hong, Chang Hyo, 302-822 Daejeon-shi (KR)
(74) Representative: Westphal, Mussgnug & Partner Patentanwälte mbB

(56) References cited:
- FR-A1- 2 921 585
- KR-A- 20050 014 583
- US-A- 2 121 956
- US-A- 2 672 909

## Description

### BACKGROUND OF THE INVENTION

An exemplary embodiment of the present invention relates to a tread block structure of a pneumatic tire and, more specifically, to a tread block structure of a pneumatic tire, capable of controlling the rigidity of the block by forming at least one tread cone using the rubber material with different physical properties from the outer surface toward the inner surface of the tread block.

A pneumatic tire is provided generally with an inner liner consisting the interior of a tire, a body ply laminated on the outer circumference of the inner liner, a belt laminated on the outer circumference of the body ply, a tread laminated on the outer circumference of the belt and substantially contacting the ground, sidewalls consisting both sides of the tire, and beads coupled to both sides of the wheel to maintain air pressure.

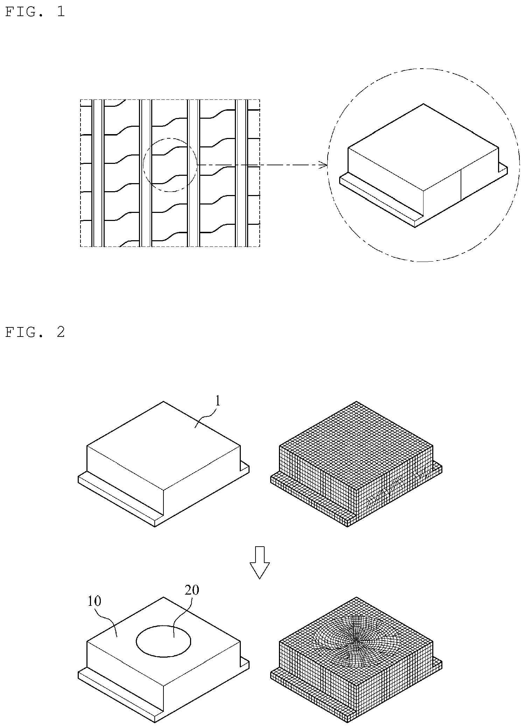

Among these, the tread is made of a thick rubber layer which directly contacts the road surface, which employs a strong rubber against puncture and impact so as to protect the inner carcass and belt layer and strong abrasion-resistant rubber to extend the driving-life span of a tire. FIG. 1 shows an example of this type of conventional tire tread block.

Meanwhile, a conventional tire is designed to deliver driving force and braking force by constituting the blocks of the tread portion with one or more layers of rubber. The rubber forming the tread portion is deformed and restored by the loads and the rotation of the tire, and the performances of a tire such as the driving force and the braking force (hereinafter, refer to as "traction") and cornering performance are influenced by the rigidity of the rubber to resist against deformation.

Therefore, the tire industry has been focused on trying to improve tire performance by controlling the tread block rigidity. Although abrasion resistance is improved when the high skid depth is applied, the rigidity of the tread block is reduced thereby to produce a trade-off tendency where the performances of the traction and the cornering are lowered. Accordingly, according to a conventional thread block configuration, there is a fundamental limitation of accomplishing techniques for enhancing the performances of a tire through controlling the tread block rigidity, which meet various performance criteria simultaneously.

The description provided above as a related art of an exemplary embodiment of the present invention is just for helping in understanding the background of the present invention and should not be construed as being included in the related art known by those skilled in the art.

Further prior art is for example disclosed in US 2 121 956 A, KR 2005 0014583 A and US 2 672 909 A.

### BRIEF SUMMARY OF THE INVENTION

Exemplary embodiments of the present invention relate to a tread block structure of a pneumatic tire, according to claim 1, which may derive a desired rigidity-performance without the trade-off the other tread performance parameters of a tire through controlling the rigidity of the block.

In order to accomplish the above object, an aspect of the present invention relates to a tread block structure of a pneumatic tire comprising at least one tread cone having different physical properties from the outer surface toward the inner surface of the tread block, through which the rigidity of the tread block is controlled.

According to the present invention, the tread cones of the tread block structure are formed by applying dually the curing temperature within the block to change the degree of cross-linking of the rubber material for a tread rubber. This means that the tread block structure is formed by applying different curing temperatures T1, T2 within a same block. Thereby, the tread block structure includes tread cones, wherein the rubber of which has different physical properties with the rubber of a surrounding area.

According to an embodiment of the tread block structure of the pneumatic tire of the present invention, the cross-section of the tread cones may be formed in various shapes such as a circle, square, triangle, diamond, rectangle, star and the like, and the tread cones may be disposed inside the tread block in a random arrangement or in a regular arrangement maintaining a certain distance and space between tread cones.

According to an embodiment of the tread block structure of the pneumatic tire of the present invention, in the inside of the tread block, the volume occupied by the tread cones may be in the range of 10 to 80% of the total volume of the tread block.

### BRIEF DESCRIPTION OF THE DRAWINGS

The above and other features of the present invention will now be described in detail with reference to exemplary embodiments thereof illustrated by the accompanying drawings which are given herein below by way of illustration only, and thus are not limitative of the present invention, and wherein:
- FIG. 1: is an enlarged view of a conventional tread block of a tire.
- FIG. 2: is a schematic drawing showing a forming method of a tread block structure for a pneumatic tire according to an embodiment of the invention.
- FIG. 3: is a schematic drawing showing some examples of the cross-section of the tread cone according to an embodiment of the invention.
- FIG. 4: is a schematic drawing showing the arrangement of the tread cones according to an embodiment of the invention.

It should be understood that the accompanying drawings are not necessarily to scale, presenting a somewhat simplified representation of various exemplary features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DESCRIPTION OF THE PREFERRED EMBODIMENTS

Hereinafter, a tread block structure for a pneumatic tire is described in more detail with reference to the accompanying drawings according to a preferred embodiment of the invention. Further, in describing the present invention, detailed descriptions related to commonly known functions and configurations will be omitted.

As used herein, the singular forms "a," "an" and "the" are intended to comprise the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the drawings, like reference numerals denote like elements and the thickness of layer or regions may be exaggerated for clarity.

The term "tread cone" as used herein refers to a portion of a tread block with pillar shape and has different physical properties from an adjacent tread portion of a tread block.

The term "physical properties" as used herein refers to hardness, modulus, elongation, wear properties and abrasion resistance of a tread cone.

An exemplary embodiment of the present invention relates to a tread block structure for a pneumatic tire, which can control the rigidity of the block by forming rubbers in pillar shapes with different physical properties from the outer surface toward the inner surface of the tread block(1).

The tread block structure comprises at least one tread cone (20) having different physical properties from the adjacent tread portion of the tread block (1).

In this case, the tread cones (20) with different physical properties existing in the tread block(1) is able to induce a different rigidity in the block shape having the same volume as the conventional structure when the tread block is deformed and restored by the load and the rotation of the tire. In addition, this can minimizes the performance of the trade-offs among various performance parameters of a tire, thereby providing a desired rigidity performance.

According to the present invention, the tread cones (20) with different properties are prepared by changing the degree of cross-linking of the rubber by applying dually the curing temperature within the block, thereby leading to changes of the modulus and tan D.

Typically, a tire is produced through a curing process for a tire wherein a semi-finished product is produced through pressing or rolling the mixture of various rubbers and chemicals, a tire is formed as a complete shape by bonding the various semi-finished products in a forming process, the tire completed in the forming process is put into a tire curing mold, and the assorted rubbers are bonded chemically by applying a series of heat and pressed water vapor from the inner and outer sides.

According to the present invention, the tread block structure is formed by applying different curing temperatures T1, T2 within a same block. For example, as shown in Fig. 2, the tread cone (20) can be applied by the temperature T1 and the surrounding area (10) can be applied by the temperature T2. Thereby, the tread block structure includes tread cones (20), wherein the rubber of which has different physical properties with the rubber of the surrounding area (10). Typically, the higher the curing temperature increases, the more the degree of cross-linking decreases, thereby modulus increase and tan D decreases. Therefore, the tire block structure according to an exemplary embodiment of the present invention enables to accomplish different physical properties in the same block in spite of using rubber of the same volume and the same kind by applying the above phenomenon appropriately, and thereby to design a desired rigidity of the entire block.

At this time, the method of applying the different curing temperatures to the same block is accomplished, but it is not limited thereto, through manufacturing the mold at a region corresponding to tread cones (20) with different metal from that of the surrounding mold region (10) thereby to differentiate the heat conductivities. Accordingly, the different temperatures can be attained at the surfaces of the mold even though the same heat input is applied.

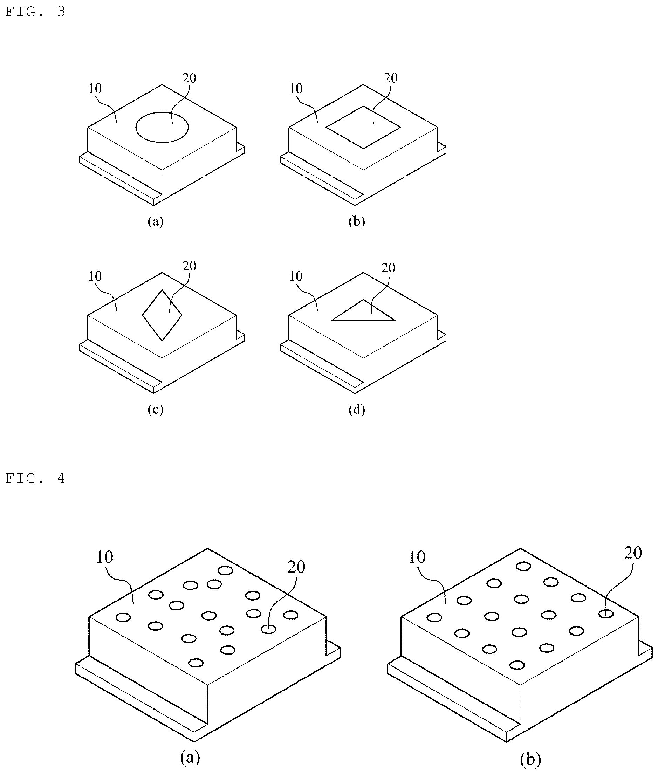

According to an embodiment of the tread block structure of the pneumatic tire of the present invention, the cross-section of the tread cones (20) may be formed in various shapes such as a circle, square, triangle, diamond, rectangle, star and the like as shown in Fig. 3(a) to (d).

The plurality of tread cones (20) may be disposed inside the tread block in a random arrangement as shown in Fig. 4a or in a regular arrangement maintaining a certain distance and space between tread cones as shown in Fig. 4b.

In the tread block structure of pneumatic tire according to an embodiment of the present invention, the volume occupied by the tread cones (20) inside the tread block may be in the range of 10 to 80% of the total volume of the tread block(1). If the volume of the tread cones (20) are less than 10%, it is insufficiently to control the rigidity through the tread cones (20), and if the volume of the tread cones (20) exceeds 80%, it considers as a rigidity variation due to the change of the overall physical properties of the rubber not as a rigidity control through the thread cones.

The graph below shows the results of simulating the control effect on the rigidity of the tread block structure according to an exemplary embodiment of the present invention.
* Tread block size: width 26 mm, length 30.5mm, depth 6.8mm
* Tread cone size: diameter 14mm
* Mesh size: 1mm x 1mm
*Solver; Abaqus 6.10.1
* Physical properties (superelasticity-Neo Hooke)
   - Tread block: C10:3, D1: 0.001
   - Example 1: C10:3, D1: 0.002
   - Example 2: C10:3, D1: 0.003
   - Example 3: C10:4, D1: 0.002
   - Example 4: C10:4.5, D1: 0.001

Here, C10 and D1 are theoretical constants defined in the physical properties of an S-S curve obtained by experimenting from material coefficients discussed in constant arithmetic progressions, thus a detailed description thereof is omitted.

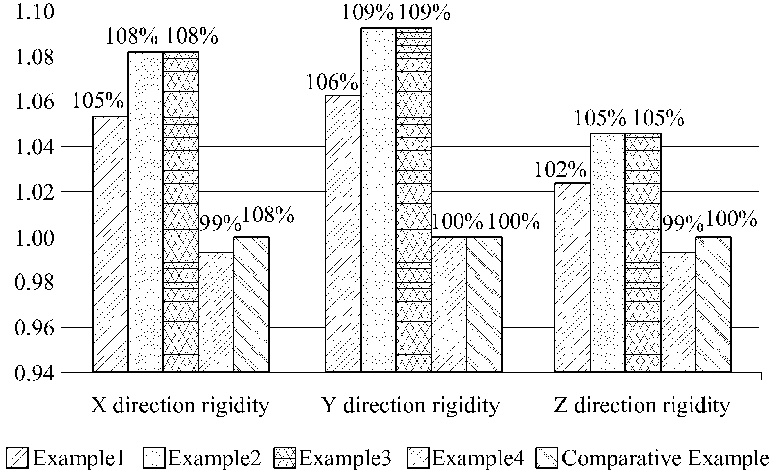

As can be seen from the above graph, according to the tire tread block structure of an exemplary embodiment of the present invention, it is confirmed that the rigidity of the tread block is varied according to the physical properties of the tread cone when applying a tread cone structure with the same volume.

According to the tread block structure of the pneumatic tire as described herein, the tread cones with different properties existing in the tread block is able to induce a different rigidity in the tread block shape having the same volume as the conventional structure when the tread block is deformed and restored by the load and the rotation of the tire.

In addition, according to various embodiments of the present invention, the tread cones with different properties existing within the tread block may control the rigidity of the tread block without the trade-off on other tread performance, and thus the tread block structure and a pneumatic tire comprising the same can exhibit an improved balance between traction, cornering performance, and abrasion resistance.

The invention has been described in detail with reference to exemplary embodiments thereof. However, it will be appreciated by those skilled in the art that changes may be made in these embodiments without departing from the principles of the invention, the scope of which is defined in the accompanying claims and their equivalents.

## Claims

1. A tread block (1) structure of a pneumatic tire comprising tread blocks separated from each other by grooves, **characterized in that** the tread block (1) comprises at least one tread cone (20) existing within the tread block (1), wherein the tread cone (20) has different physical properties from a surrounding area (10) around the tread cone (20), and wherein the tread cone (20) and the surrounding area (10) are made of a same rubber composition, and the tread cone (20) is formed by curing at different curing temperature from a curing temperature of the surrounding area (10), and thus a degree of cross-linking of a rubber of the tread cone (20) is different from the degree of cross-linking of a rubber of the surrounding area (10).

2. The tread block structure of the pneumatic tire of claim 1, wherein the cross-sections of the tread cones have shapes selected from the group consisting of circle, square, triangle, diamond, rectangle, and star.

3. The tread block structure of the pneumatic tire of claim 1, wherein the tread cones are disposed inside the tread block in a random arrangement or in regular arrangement maintaining a certain distance and space between tread cones.

4. The tread block structure of the pneumatic tire of claim 1, wherein inside of the tread block, the volume occupied by the tread cones is in the range of 10 to 80% of the total volume of the tread block.

## Patentansprüche

1. Profilblock- (1) -struktur eines Luftreifens, die durch Rillen voneinander getrennte Profilblöcke aufweist, **dadurch gekennzeichnet, dass** der Profilblock (1) wenigstens einen in dem Profilblock (1) bestehenden Profilkegel (20) aufweist, wobei der Profilkegel (20) andere physikalische Eigenschaften als ein umgebender Bereich (10) um den Profilkegel (20) hat und wobei der Profilkegel (20) und der umgebende Bereich (10) aus einer gleichen Kautschukzusammensetzung hergestellt sind und der Profilkegel (20) durch Vulkanisieren bei einer anderen Vulkanisationstemperatur als einer Vulkanisationstemperatur des umgebenden Bereichs (10) gebildet wird und ein Vernetzungsgrad eines Kautschuks des Profilkegels (20) sich daher vom Vernetzungsgrad eines Kautschuks des umgebenden Bereichs (10) unterscheidet.

2. Profilblockstruktur des Luftreifens nach Anspruch 1, wobei die Querschnitte der Profilkegel aus der Gruppe bestehend aus Kreis, Quadrat, Dreieck, Raute, Rechteck und Stern ausgewählte Formen haben.

3. Profilblockstruktur des Luftreifens nach Anspruch 1, wobei die Profilkegel unter Beibehaltung eines gewissen Abstands und Zwischenraums zwischen Profilkegeln in einer unregelmäßigen Anordnung oder in regelmäßiger Anordnung in dem Profilblock angeordnet sind.

4. Profilblockstruktur des Luftreifens nach Anspruch 1, wobei in dem Profilblock das von den Profilkegeln eingenommene Volumen im Bereich von 10 bis 80 % des Gesamtvolumens des Profilblocks ist.

## Revendications

1. Structure de pavé de bande de roulement (1) d'un pneumatique comprenant des pavés de bandes de roulement séparés les uns des autres par des rainures,
**caractérisée en ce que**
le pavé de bande de roulement (1) comprend au moins un cône de bande de roulement (20) situé dans celui-ci, le cône de bande de roulement (20) ayant des propriétés physiques différentes de celles de la zone (10) de la bande de roulement (20) située autour de ce cône, le cône de bande de roulement (20) et la zone (10) qui l'entoure étant réalisés dans la même composition de caoutchouc, le cône de bande de roulement (20) étant formé par vulcanisation à une température de vulcanisation différente de la température de vulcanisation de la zone environnante (10), et ainsi, le degré de réticulation du caoutchouc du cône de bande de roulement (20) étant différent du degré de réticulation du caoutchouc de la zone environnante (10).

2. Structure de pavé de bande de roulement d'un pneumatique conforme à la revendication 1,
dans laquelle les sections transversales des cônes de bande de roulement ont des formes choisies dans le groupe constitué par une forme circulaire, une forme carrée, une forme triangulaire, une forme en diamant, une forme rectangulaire et une forme d'étoile.

3. Structure de pavé de bande de roulement d'un pneumatique conforme à la revendication 1,
dans laquelle les cônes de bande de roulement sont situés à la partie interne du pavé de bande de roulement selon une configuration aléatoire ou une configuration régulière en maintenant une certaine distance et un certain espace entre les cônes de bande de roulement.

4. Structure de pavé de bande de roulement d'un pneumatique conforme à la revendication 1,
dans laquelle à la partie interne du pavé de bande de roulement le volume occupé par les cônes de bande de roulement est situé dans la plage de 10 à 80 % du volume total du pavé de bande de roulement.
